# EUROPEAN PATENT APPLICATION

(11) **EP 1 935 907 A2**
(43) Date of publication of application: **25.06.2008**
(21) Application number: 07123309.2
(22) Date of filing: 17.12.2007
(51) Int. Cl.: C08F 8/50, C08L 23/22

(54) **Tire sealant containing silica and depolymerized butyl rubber in the presence of organoperoxide and modifier**

(30) Priority: 19.12.2006 US 875781 P
(71) Applicant: THE GOODYEAR TIRE & RUBBER COMPANY, Akron, OH 44316-0001 (US)
(72) Inventor: Iicavo, Joseph Alan, Hudson, OH 44236 (US); Busch, Warren James, North Canton, OH 44720 (US); Pilkington, Mervin Victor, Akron, OH 44319 (US)
(74) Representative: Kutsch, Bernd

(57) **Abstract**

The present invention relates to a tire puncture sealant and a pneumatic tire containing such puncture sealant. The sealant contains silica reinforcement and butyl rubber depolymerized in the presence of an organoperoxide and modifier comprised of a metal oxide (e.g. magnesium oxide) or a combination of metal oxide modifier and calcium carbonate co-modifier.

## Description

### Field of the Invention

The present invention relates to a tire sealant precursor composition and a pneumatic tire containing such a sealant layer. The sealant contains silica reinforcement and butyl rubber depolymerized in the presence of an organoperoxide and modifier comprising a metal oxide (e.g. magnesium oxide) or a combination of metal oxide modifier and calcium carbonate co-modifier.

### Background of the Invention

Various pneumatic tires have been proposed which contain a built-in sealant layer based upon a depolymerized butyl rubber layer. For example, see US-B- 4,895,610, US-B- 4,228,839, US-B- 4,171,237, US-B- 4,140,167 and US-A 2005/0205186.

Additional patent publications which propose various tire constructions which may involve built-in or built-on sealants for tires such as for example, US-B- 1,239,291, US-B- 2,877,819, US-B- 3,048,509, US-B- 3,563,294, US-B-4,206,796, US-B- 4,286,643, US-B- 4,359,078, US-B- 4,444,294, US-B-4,895,610, US-B- 4,919,183 and US-B- 4,966,213.

In one aspect, the various proposed built-in sealant layers for the pneumatic tires which are derived from a depolymerization of a butyl rubber-based sealant precursor composition typically contain a rubber reinforcing carbon black filler, in addition to the precipitated silica, to render the sealant black in color or may contain precipitated silica with only a minimal amount of carbon black, if any, preferably exclusive of carbon black, together with a colorant to color the sealant layer a color other than black.

For this invention, it is desired to provide a puncture sealant layer for a pneumatic tire which is derived from a depolymerization of a butyl rubber in a silica reinforcement-containing sealant precursor composition, by means of an organoperoxide in the presence of a modifier composed of a metal oxide (e.g. magnesium oxide) and optionally together with a calcium carbonate co-modifier.

For such sealant formation, a balance between organoperoxide efficiency for the in situ depolymerization of the butyl rubber and by-product(s) formed during (or as a result of) the in situ depolymerization of the butyl rubber is of interest.

In particular, an organoperoxide is sought in which the free radical promoted butyl rubber depolymerization activity, or rate, is compatible with the cure rate of the associated tire rubber components so that, as the tire cures in the tire mold at an elevated temperature for a period of time, butyl rubber is depolymerized to a suitable extent.

Further, it is also desired that free radical decomposition by-products derived from such organoperoxide in situ within the sealant forming composition are primarily liquid byproducts rather than gaseous byproducts at room temperature (e.g. at 23°C) in order to reduce potential gas formation from the organoperoxide itself within the sealant.

Accordingly, on this basis, dicumyl peroxide, a relatively commonly used organoperoxide for many purposes, is a preferred organoperoxide for use in this invention.

However, it is considered herein that a simple selection of dicumyl peroxide as the preferred organoperoxide based on the above consideration to be used by itself is not sufficient for some purposes of producing the puncture sealant composition, particularly where a tire cure temperature of less than 170°C is used (e.g. a tire cure temperature in a range of from 140°C to 155°C is used for relatively large truck and off-the-road tires rather smaller passenger tires which might use a tire curing temperature in a range of, for example, from 165°C to 175°C).

In particular, in such circumstance, the efficiency of dicumyl peroxide in depolymerizing the butyl rubber is significantly reduced by presence of the precipitated silica and optional clay in the sealant precursor composition because the precipitated silica and clay are relatively acidic in nature and therefore tend to cleave the dicumyl peroxide by an ionic mechanism to therefore retard its efficiency in producing and providing free radicals necessary for in situ depolymerization of the butyl rubber in the sealant precursor composition.

Accordingly, for this invention, a somewhat basic modifier in a form of a basic metal oxide (e.g. magnesium oxide) or combination of basic metal oxide modifier and calcium carbonate co-modifier is used as an acid acceptor to promote a degree of neutralization of acid sites on the precipitated silica, and clay if used. Such metal oxide modifier may be, for example, magnesium oxide. Accordingly, for the purposes of the description of this invention, the term "basic metal oxide" is intended to relate to a metal oxide which can act as an acid acceptor to promote the aforesaid degree or neutralization of acid sites on the precipitated silica, and clay if used. The addition of such acid neutralizing basic metal oxide modifier, and optional calcium carbonate co-modifier, is considered herein to render the organoperoxide (e.g. the dicumuyl peroxide) more efficient for the depolymerization of the butyl rubber. By inhibiting the aforesaid acid-catalyzed decomposition of the dicumyl peroxide itself, the acid neutralizing basic metal oxide (e.g. magnesium oxide) modifier, and optional additional calcium carbonate co-modifier, is considered herein to serve to, in one sense, promote a more efficient decomposition of the butyl rubber by the free radical-producing organoperoxide, namely the aforesaid dicumyl peroxide.

Therefore, a significant embodiment of the invention is the use of a combination of organoperoxide comprising dicumyl peroxide as an organoperoxide together with a modifier comprising a basic metal oxide modifier, such as for example, magnesium oxide, and optionally also including a calcium carbonate as a co-modifier, for the sealant precursor in which such modifier(s) tend to promote a more efficient organoperoxide for the in situ depolymerization reaction of the butyl rubber in the presence of the precipitated silica and optional clay.

An additional significant embodiment of the invention is the use in the sealant composition of the optional calcium carbonate co-modifier in a form of a relatively fine particle size dispersion. For such purpose, particulate calcium carbonate co-modifier having an average particle diameter in a range of from 1 to 20 nanometers, more preferably 1 to 5 nanometers, is preferred in order to promote, or provide, a suitable green strength for the sealant precursor composition to enhance its processing.

A further embodiment of the invention is a treatment of the precipitated silica with, for example, at least one of polyalkylene glycol (e.g. polyethylene glycol) and alkoxysilane in order to inhibit, retard and/or significantly prevent significant contact of hydroxyl groups contained on the precipitated (synthetic amorphous) silica aggregates with the organoperoxide, as well as possibly water moieties thereon.

Accordingly, in one embodiment, the precipitated silica may be treated in situ within the rubber composition prior to addition of the organoperoxide, or may be pre-treated prior to its addition to the rubber composition, with a low molecular weight polyalkylene oxide polymer, which might sometimes be referred to as a polyalkylene glycol (e.g. polyethylene glycol) and/or with an alkoxysilane.

Indeed, it is considered herein that significant challenges are presented using the precipitated silica (optionally also including the clay when used in combination with the precipitated silica), particularly when used in place of rubber reinforcing carbon black for reinforcing filler for a non-black colored sealant for the above reasons.

Therefore, as indicated above, when the precipitated silica is used, it is preferably treated with at least one of a polyalkylene oxide (e.g. polyethylene oxide) and alkoxysilane.

In a further embodiment of the invention, while the butyl rubber, as a copolymer of isobutylene and isoprene, may be composed of greater than one weight percent units derived from isoprene, it is preferred that it is composed of from only 0.5 to 1.0 weight percent units derived from isoprene. The use of a butyl rubber with such low unsaturation content is to promote a more efficient depolymerization by treatment with the organoperoxide where it is envisioned that the presence of the double bonds within the butyl rubber may tend to terminate its depolymerization when the depolymerization process reaches the double bond unsaturation in the butyl rubber.

In an additional aspect of the invention, to promote better processing of the butyl rubber-based sealant precursor composition, it is desired to use a butyl rubber that has a relatively high Mooney viscosity (ML+8) value at 125°C in a range of from 25 to 60, alternately from 40 to 60.

Thus a butyl rubber of very low isoprene-based unsaturation content (for more effective depolymerization of the butyl rubber) and relatively high Mooney viscosity (to promote better physical handling of the sealant precursor composition) is desired.

In practice, it is desired herein for the butyl rubber-based sealant precursor composition to have a storage modulus (G') physical property, at a 5 percent dynamic strain at 100°C and 1 Hertz in a range of 170 to 350 kPa, alternately in a range of from 175 to 300 kPa.

For such purpose, it is desired herein for the depolymerized butyl rubber sealant composition to have a significantly lower storage modulus (G') physical property, at a 5 percent dynamic strain at 100°C and 1 Hertz in a range of from 10 to 100 kPa, alternately in a range of from 10 to 50 kPa, or a range of from 10 to 45 kPa.

In practice, such storage modulus (G') may be determined, for example, by an RPA (Rubber Process Analyzer) instrument which measures the strain sweep at 100°C at 1 Hertz over a range of, for example, from 1 to 50 percent strain. Such storage modulus (G') measurement for rubber samples is well known to those having skill in such art. Such a Rubber Process Analyzer is RPA 2000™ instrument by Alpha Technologies, formerly the Flexsys Company and formerly the Monsanto Company. References to an RPA-2000 instrument may be found in the following publications: H. A. Palowski, et al, Rubber World, June 1992 and January 1997, as well as Rubber & Plastics News, April 26 and May 10, 1993.

In the description of this invention, the term "phr" is used to designate parts by weight of an ingredient per 100 parts of elastomer unless otherwise indicated. The terms "elastomer" and "rubber" are used interchangeably unless otherwise indicated. The terms "cure" and "vulcanize" are used interchangeably unless otherwise indicated.

### Summary and Practice of the invention

In accordance with this invention a tire sealant precursor composition according to claim 8 is provided.

Preferably, the basic metal oxide modifier is comprised of magnesium oxide.

In practice, it is preferred that the tire sealant precursor composition contains a polyethylene glycol having a weight average molecular weight in a range of from 2,000 to 15,000, alternately from 2,000 to 10,000.

In practice it is desired that the precipitated silica, is a pre-treated precipitated silica (pre-treated in a sense of being treated prior to addition of said organoperoxide) within the rubber composition or by pre-treatment of the silica prior to its addition to the rubber composition with a polyethylene glycol having a weight average molecular weight in a range of from 2,000 to 15,000, alternately 2,000 to 10,000.

Such pre-treatment of the precipitated silica is to at least partially inhibit absorption of the organoperoxide (e.g. dicumyl peroxide) onto the precipitated silica.

In further accordance with the invention, a tire according to claim 10 is provided which contains said tire sealant precursor composition, particularly in a form of a layer of such composition.

The butyl rubber based sealant precursor layer is built into the tire to form a tire assembly and its butyl rubber component is at least partially depolymerized in situ in the presence of said organoperoxide and magnesium oxide modifier, and optionally also including said calcium carbonate co-modifier, during a subsequent curing of the tire at an elevated temperature in a suitable mold to form a self-sealing tire having the resultant built-in sealant layer.

In further accordance with this invention, a tire according to claim 1 is provided.

The puncture sealant preferably contains said polyethylene glycol.

In additional accordance with this invention, a pneumatic rubber tire is provided with a puncture sealing layer, wherein said puncture sealant layer is said butyl rubber sealant precursor having its butyl rubber partially depolymerized in situ in said tire with said combination of said organoperoxide and modifier comprising a basic metal oxide (e.g. magnesium oxide) or a combination of said metal oxide modifier and calcium carbonate co-modifier.

In further accordance with this invention, a pneumatic tire is provided having said sealant layer positioned:
(A) between a tire innerliner rubber layer and tire rubber carcass, or
(B) between two tire innerliner rubber layers, (and therefore covered by at least one tire innerliner rubber layer), or
(C) on an exterior surface of a tire innerliner rubber layer.

In additional accordance with this invention, such pneumatic tire is provided wherein said sealant layer:
(A) extends from one shoulder of the tire to the other shoulder of the tire through the crown region of the tire;
(B) is positioned in at least one tire shoulder area region and extends into at least a portion of the adjoining tire sidewall portion of the tire, or
(C) extends from sidewall-to-sidewall of the tire through the tire crown region.

In practice, said puncture sealing layer preferably comprises, based upon parts by weight per 100 parts by weight of said partially depolymerized butyl rubber:
(A) said partially depolymerized butyl rubber (by said depolymerization of said butyl rubber in situ in said tire by said combination of organoperoxide and modifier comprising a basic metal oxide (e.g. magnesium oxide) modifier and optionally a calcium carbonate co-modifier);
(B) particulate filler comprising clay (e.g. from 1 to 15 phr);
(C) particulate reinforcing filler comprising:
   (1) precipitated silica (e.g. from 5 to 50 phr) and rubber reinforcing carbon black; or
   (2) precipitated silica (e.g. 5 to 50 phr of precipitated silica);
(D) optionally from 0 to 6, alternately 0.5 to 5, phr of short organic fibers;
(E) optionally a colorant of other than a black color when said reinforcing filler is said precipitated silica or said precipitated silica and up to 2 phr of rubber reinforcing carbon black, such as 0.5 to 2 phr, so long as said sealant is of a color other than black; preferably a colorant selected from at least one of organic pigments, inorganic pigments and dyes, and preferably from organic pigments and inorganic pigments;
(F) optionally from 0 to 20, alternately 2 to 15, phr of rubber processing oil, preferably a rubber processing oil having a maximum aromatic content of 15 weight percent, and preferably a naphthenic content in a range of from 35 to 45 weight percent and preferably a paraffinic content in a range of 45 to 55 weight percent.

For the practice of this invention, representative examples of polyalkylene glycols are, for example, polyethylene glycols having an average (weight average) molecular weight in a range of from 2,000 to 15,000, alternately from 2,000 to 10,000, are preferred.

Examples of commercially available polyethylene glycols may be, for example, those such as Carbowax™ PEG 3350 as well as Carbowax™ PEG 8000 from the Dow Chemical Company with said Carbowax™ PEG 8000 reportedly having a weight average molecular weight in a range of about 7,000 to about 9,000 as determined by its NIR (near infrared) method 1 B-ZMETH1.3. A further discussion concerning various polyalkylene oxide polymers, and particularly polyethylene glycols including said Carbowax PEG 8000 may be found, for example, in US-B- 6,322,811 and US-B- 4,082,703.

In practice, various clays may be used. Representative of such clays are, for example, kaolin clays. It is envisioned herein that a benefit of utilization of such clay is to provide a modified, or tempered, degree of reinforcement, as compared to the silica, for the sealant precursor composition to aid in its aforesaid processing and also to aid, in combination with the silica, in providing the aforesaid suitable storage modulus (G') of the resultant depolymerized butyl rubber-based sealant composition.

In practice, various synthetic amorphous silicas may be used, such as, and preferably, precipitated silica. Representative of such precipitated silicas are, for example, HiSil 546™ and HiSil 532™ from PPG Industries, Hubersil 4155™ from the J. M. Huber Company and Ultrasil™ VN2 and VN3 from the Degussa Company.

The optional various rubber processing oils are well known to those having skill in such art. For this invention, a rubber processing oil having a low aromaticity content is preferred, namely a rubber processing oil having an aromaticity content of less than 15 weight percent. Such rubber processing oil may be composed of, for example, 35 to 45 weight percent naphthenic content, 45 to 55 weight percent paraffinic content and an aromatic content of less than 15 weight percent (e.g. from 10 to 14 weight percent). It is considered herein that a representative of such preferred rubber processing oil is Tufflo 100™ from the Barton Solvent Company. The rubber processing oil, in relatively low concentrations, is seen herein to aid in mixing the ingredients for the sealant precursor composition and to aid in promoting the aforesaid processing of sealant precursor composition.

The optional short fibers may be selected from, for example, cotton fibers and from synthetic fibers selected from rayon, aramid, nylon and polyester fibers, and their mixtures. In practice, such cotton short fibers may have an average length, for example, in a range of up to 200 microns (e.g. an average length of 150 microns) and the synthetic (e.g. the polyester and nylon fibers) may have an average length, for example, of up to a maximum of 2,500 microns. The short fibers are considered herein to aid in promoting the effectiveness of the sealing ability of the resultant sealant composition. In relatively low concentrations, such synthetic fibers are not seen herein as significantly interfering with the processing of the sealant precursor composition yet as promoting the effectiveness of the resultant built-in sealant layer for its puncture sealing ability.

In practice, various colorants may be used where a sealant is desired having a color other than black. For example, such colorant may contain titanium dioxide. For example, the colorant of such sealant composition may preferably be composed of titanium dioxide where a white colored sealant layer is desired. Also, such colorant may contain, or comprise, titanium dioxide as a color brightener together with at least one non-black organic pigment and/or non-black inorganic pigment or dye.

Various optional colorants may be used to provide a non-black color to the sealant and sealant precursor composition, if a non-black color is desired. Representative of such colorants are, for example, yellow colored colorants as Diarylide Yellow™ pigment from PolyOne Corporation and Akrosperse E-6837™ yellow EPMB pigment masterbatch with an EPR (ethylene/propylene rubber) from the Akrochem Company. As discussed above, such yellow colored pigment may be used in combination and therefore together with titanium dioxide.

Various organoperoxides may be used for the sealant precursor butyl rubber-based composition. Preferably organoperoxides are used which become active (e.g. generate peroxide free radicals) at high temperatures, that is, for example, above 100°C. Such organoperoxides are referred to therein as active peroxides. Examples of such organoperoxides which are considered herein as being active organoperoxides are, for example, tertbutyl perbenzoate and dialkyl peroxides with the same or different radicals, such as dialkylbenzene peroxides and alkyl pre-esters. Preferably the active organoperoxide will contain two peroxide groups. Frequently the peroxide groups are attached to a tertiary butyl group. The basic moiety on which the two peroxide groups are suspended can be aliphatic, cycloaliphatic, or aromatic radicals. Some representative examples of such active organoperoxides are, for example, n-butyl 4,4-di-(tert-butylperoxy) valerate, 2,5-bis(t-butyl peroxy)-2,5-dimethyl hexane; 1,1-di-t-butyl peroxi-3,3,5-trimethyl cyclohexane; 2,5-dimethyl-2,5-di(t-butyl peroxy) hexyne-3; p-chlorobenzyl peroxide; 2,4-dichlorobenzyl peroxide; 2,2-bis-(t-butyl peroxi)-butane; di-t-butyl peroxide; benzyl peroxide; 2,5-bis(t-butyl peroxy)-2,5-dimethyl hexane, dicumyl peroxide; and 2,5-dimethyl-2,5-di(t-butyl peroxy) hexane. The dicumyl peroxide is a preferred organoperoxide for use in combination with the metal oxide (e.g. magnesium oxide) modifier, and optionally said additional calcium carbonate co-modifier, for the in situ depolymerization of the butyl rubber contained in the sealant precursor composition.

Such organoperoxide may be provided on a mineral carrier such as, for example calcium carbonate or a combination of calcium carbonate and calcium silicate.

In practice, a pneumatic tire having a puncture sealing ability comprising an assembly of components comprising an outer circumferential (sulfur curable) rubber tread, (sulfur curable) rubber carcass supporting said tread and an inner (sulfur curable) halobutyl rubber-based tire innerliner layer, may be prepared by, for example:
(A) positioning a layer of said sealant precursor, (exclusive of sulfur curative), between said tire innerliner rubber layer and said tire rubber carcass to form a tire assembly thereof, and
(B) vulcanizing said tire assembly in a suitable mold at an elevated temperature, in a range of from, for example, 130°C to 175°C, for a sufficient period of time to partially depolymerize said butyl rubber and thereby form a built-in sealant layer in said tire.

In practice, it is conventionally preferred that the butyl rubber and precipitated silica are blended in at least one sequential preparatory, or non-productive, mixing stage in the absence of the organoperoxide and metal oxide (e.g. magnesium oxide) modifier (together with at least one of the additional ingredients) followed by a final, or productive, mixing stage in which the organoperoxide and metal oxide modifier, optionally including the calcium carbonate co-modifier, (and possibly one or more of the additional ingredients), are added.

Conventionally, the non-productive mixing stage(s) may be conducted, for example, by mixing the ingredients to a temperature, for example, in a range of from 110 to 150°C and the subsequent productive mixing stage may be conducted, for example, by mixing the ingredients to a temperature in a range of from 85 to 100 °C.

A significant aspect of this invention is the at least partial depolymerization of the butyl rubber layer in situ in the tire during the vulcanization of the tire itself in a suitable mold at an elevated temperature via a combination of the organoperoxide and metal oxide modifier and optionally the additional calcium carbonate co-modifier, in the presence of precipitated silica, which may also include a rubber reinforcing carbon black, to create the built-in puncture sealant layer.

This is considered herein to be significant because said butyl rubber sealant precursor composition is conveniently processable as a rubber composition which can be suitably built as a rubber layer into a tire.

In practice, upon vulcanization of the tire assembly under conditions of elevated temperature, a major portion of the uncured butyl rubber composition is considered herein to be depolymerized in the presence of the organoperoxide compound to form a tacky material.

In practice, said tire innerliner halobutyl rubber-based layer is typically a sulfur curative-containing halobutyl rubber composition of a halobutyl rubber such as for example chlorobutyl rubber or bromobutyl rubber.

Such tire halobutyl rubber-based innerliner layer may also contain one or more sulfur curable diene-based elastomers such as, for example, cis 1,4-polyisoprene natural rubber, cis 1,4-polybutadiene rubber and styrene/butadiene rubber, and their mixtures, or more preferably a combination of one or more of said halobutyl rubbers and said diene based elastomers.

As the tire is vulcanized together with the butyl rubber-based rubber composition layer (the sealant layer precursor), the butyl rubber of the butyl rubber-based composition layer which is to become the sealant layer, becomes partially depolymerized, preferably to an extent that its aforesaid resultant storage modulus (G') physical property, at a 5 percent dynamic strain at 100°C and 1 Hertz, is, for example, in a range of from 10 to 100 kPa, alternately in a range of from 10 to 50 kPa and further alternately in a range of from 10 to 45 kPa.

In effect, the butyl rubber in the butyl rubber based composition sealant layer is depolymerized to a low viscosity to form a tacky material which has puncture sealing properties. Thus, the butyl rubber composition sealant precursor layer is transformed into a puncture sealant layer during the curing of the tire. This at least partial depolymerization of the butyl rubber composition layer is effectuated by the presence of a combination of the one or more free radical-generating organoperoxides and metal oxide modifier, and optionally said additional calcium carbonate co-modifier, contained in the butyl rubber based sealant precursor composition.

In practice, the butyl rubber composition as the sealant precursor contains a sufficient amount of the free radical-generating organoperoxide (in combination with the metal oxide modifier and optionally including said calcium carbonate co-modifier) to cause the butyl rubber to partially depolymerize, which may be, for example, in a range of from 0.5 to 15 phr of the active organoperoxide depending somewhat upon the time and temperature of the tire curing operation and the degree of depolymerization desired.

The various components of the sealant layer can be mixed together using convenient rubber mixing equipment, particularly an internal rubber mixer. The rubber composition used in the sealant precursor layer typically has sufficient viscosity and unvulcanized tack to enable its incorporation into an unvulcanized tire without significantly departing from conventional tire building techniques.

In an exemplary method of this invention, the butyl rubber-based sealant precursor composition can be formed into a rubber strip by using conventional equipment such as a calender, extruder, or any combination thereof, and the rubber strip assembled into the tire. In building the tires of this invention a rubber innerliner of a butyl rubber based (e.g. bromobutyl rubber) rubber composition is first applied to a building drum and then the strip of butyl rubber based sealant precursor layer is applied to the layer of innerliner and thereafter the remainder of various carcass plies and layers of the tire assembly. The butyl rubber based sealant precursor layer is thereby assembled into the unvulcanized tire assembly of components between an innerliner layer and tire carcass.

The thickness of the sealant composition layer can vary greatly in an unvulcanized puncture sealant containing tire. Generally, the thickness of the sealant composition layer may range from about 0.13 cm (0.05 inches) to about 1.9 cm (0.75 inches). In passenger tires it is normally desired for the sealant composition layer to have a thickness of about 0.32 cm (0.125 inches) whereas for truck tires, a thickness of about 0.76 cm (0.3 inches) or greater might be desired.

After the unvulcanized pneumatic rubber tires of this invention are assembled they are vulcanized using a normal tire cure cycle. The tires of this invention can be cured over a wide temperature range. For example, passenger tires might be cured at a temperature ranging from 130°C to 170°C and truck tires might be cured at a temperature ranging from 130°C to 170°C. Thus, a cure temperature may range, for example, from 130°C to 170°C and for a period of time (e.g. from 10 to 45 minutes or more depending somewhat upon the size of the tire and the degree of desired depolymerization of the butyl rubber as well as the thickness of the sealant layer itself) and sufficient to at least partially depolymerize said sealant precursor layer.

As hereinbefore discussed, a particular application of the dicumyl peroxide in combination with the basic metal oxide modifier as magnesium oxide, whether or not in combination with calcium carbonate co-modifier, is for use in the curing of tires which contain the sealant precursor composition at a temperature range of from 140°C to 155°C and particularly for relatively large truck tires and off-the-road tires.

Accordingly, in one aspect of the invention, a self-sealing pneumatic rubber tire of this invention is envisioned wherein the tire has sidewalls, a supporting carcass, inextensible beads, an innerliner (air barrier layer), a sealant layer, and an outer circumferential tread (tread portion). The individual sidewalls extend radially inward from the axial outer edges of the tread portion to join the respective inextensible beads. The supporting carcass acts as a supporting structure for the tread portion and sidewalls. The sealant layer is disposed between said supporting carcass and said innerliner. The outer circumferential tread is adapted to be ground contacting when the tire is in use.

The following examples are included to further illustrate the method of manufacturing the self-sealing pneumatic rubber tires of this invention. Unless specifically indicated otherwise, parts and percentages are given by weight.

### EXAMPLE I

Illustrative butyl rubber-based sealant precursor compositions are prepared by mixing ingredients in an internal mixer. The ingredients are mixed in a first, non-productive, mixing stage without the organoperoxide followed by a second, productive, mixing stage in which dicumyl peroxide is added subsequent to addition of a precipitated silica. The ingredients are illustrated in the following Table 1.

Control Sample A represents a sealant precursor rubber composition using a more active organoperoxide "A".

Samples B through D represent a sealant precursor rubber composition using a less active organoperoxide "B", namely a dicumyl peroxide.

For Sample B, less active organoperoxide "B" is used.

For Sample C, the less active organoperoxide "B" is used in combination with a magnesium oxide modifier.

For Sample D, the less active organoperoxide "B" is used in combination with a calcium carbonate co-modifier.

The parts and percentages are by weight unless otherwise indicated.

**Table 1**

| | | Parts | | |
|---|---|---|---|---|
| Material | Control Sample A | Sample B | Sample C | Sample D |
| ***First (Non-Productive) Mixing Step (to 120°C)*** | | | | |
| Butyl rubber¹ | 100 | 100 | 100 | 100 |
| Precipitated, amorphous silica² | 20 | 20 | 20 | 20 |
| Clay³ | 10 | 10 | 10 | 2 |
| Calcium carbonate | 0 | 0 | 0 | 8 |
| Polyethylene glycol⁴ | 0.25 | 0.25 | 0.25 | 0.25 |
| Rubber processing oil⁵ | 3 | 3 | 3 | 3 |
| Colorant as a yellow colored pigment masterbatch⁶ | 1 | 1 | 1 | 1 |
| Magnesium oxide | 0 | 0 | 2 | 0 |

| ***Second (Productive) Mixing Step (to 93°C)*** | | | | |
|---|---|---|---|---|
| More active organoperoxide "A"⁷ | 12 | 0 | 0 | 0 |
| Less active organoperoxide "B"⁸ | 0 | 12 | 12 | 12 |
| Delta G' 5%, kPa⁹ | 200 | 170 | 198 | 201 |

| | | | | |
|---|---|---|---|---|
| ¹Butyl rubber as Exxon 068™ from the ExxonMobil Company, having a Mooney (1 +8) viscosity at 125°C of about 51, as a copolymer of isobutylene and isoprene having less than one percent units derived from isoprene ²Amorphous precipitated silica as Hubersil 4155 from J. M. Huber Company ³Kaolin clay as RC-32™ from Thiele Kaolin Company ⁴Polylethylene glycol having a weight average molecular weight of 8,000 (understood to be about plus or minus about 1,000) as Carbowax PEG 8000™ from the Dow Chemical Company ⁵Rubber processing oil as Tufflo 100™ from Barton Solvents Company reportedly a naphthenic, paraffinic rubber processing oil having a maximum aromatic content of less than 15 weight percent ⁶A yellow colored organic/inorganic pigment as Akrosperse E-6837™ yellow EPMB pigment masterbatch with EPR (ethylene/propylene rubber), in a 50/50 weight ratio of yellow pigment to EPR, from the Akrochem Company and reported in Table 1 as the composite. ⁷Organoperoxide "A" as a composite of organoperoxide as a combination of n-butyl-4,4-di(tert-butyl-peroxy) valerate and a mineral carrier as a combination of calcium carbonate and calcium silicate containing 40 weight percent of the organoperoxide (thus reported herein as being 40 percent active) as Link Cup NBV 40C™ from the Geo Specialty Chemical Company and reported in Table 1 as the composite. ⁸Organoperoxide "B" as a composite of organoperoxide as a combination of dicumyl peroxide and a mineral carrier as a combination of calcium carbonate and calcium silicate containing 0 weight percent of the dicumyl peroxide (thus reported herein as being 40 percent active) as Luperox DCP40P™ from the Arkema company and reported in Table 1 as the composite. ⁹The difference between the storage modulus (G') for the sealant precursor composition (before organoperoxide depolymerizaztion of the butyl rubber in the sealant precursor composition) and the storage modulus (G') for the sealant (after the organoperoxide decomposition of the butyl rubber) for Samples A through D is reported in Table 1 in terms of their Delta G' at a 5 percent dynamic strain at 100°C and 1 Hertz. | | | | |

The Samples were heated to a temperature of 150°C for 30 minutes to at last partially depolymerize the butyl rubber in the presence of the organoperoxide.

From Table 1 it can be seen that the delta G' for Sample B (only 170 kPa) which used the less active organoperoxide "B", namely the dicumyl peroxide composite, was significantly less than the delta G' for the Control Sample A (200 kPa) which used the more active organoperoxide "A". Such delta G' results for Sample B is considered herein as being undesirable in a sense of desiring the delta G' for Sample B to be similar to delta G' for Control Sample A of 200 kPa which used the more active organoperoxide "A".

From Table 1 it can be seen that the delta G' for Sample C (198 kPa) which also used the less active organoperoxide "B", namely the dicumyl peroxide in combination with a magnesium oxide modifier was similar to the delta G' for the Control Sample A (200 kPa). Such delta G' results for Sample C is considered herein as being desirable in a sense of desiring the delta G' for Sample C to be similar to delta G' for Control Sample A of 200 kPa which used the more active organoperoxide "A".

From Table 1 it can be seen that the delta G' for Sample D (201 kPa) which also used the less active organoperoxide "B", namely the dicumyl peroxide in combination with a calcium carbonate co-modifier was similar to the delta G' for the Control Sample A (200 kPa). Such delta G' results for Sample D is considered herein as being desirable in a sense of desiring the delta G' for Sample C to be similar to delta G' for Control Sample A of 200 kPa which used the more active organoperoxide "A".

From these results, it is considered herein that use of the less active organoperoxide "B" without the indicated modifiers as indicated by Sample B yielded a significantly reduced delta G' which is considered undesirable.

Moreover, use of the less dicumyl peroxide as the preferred organoperoxide, as compared to the more active organoperoxide "A" is considered to be also favored in view if its byproducts being understood to comprise liquid byproducts instead of gaseous byproducts at 23°C.

The aforesaid storage modulus (G') physical properties are determined at a 5 percent dynamic strain at 1 Hertz at 100°C by an aforesaid RPA (Rubber Process Analyzer) instrument. The measurement was made prior to, and after, a 30 minute heat at 150°C to yield a delta G' (at a 5 percent dynamic strain) for the depolymerization reaction. The Rubber Process Analyzer instrument used was RPA 200O™ instrument by Alpha Technologies, formerly the Flexsys Company and formerly the Monsanto Company.

### EXAMPLE II

A tubeless pneumatic steel belted medium radial truck tire of the type Goodyear G287 11 R22.5 is prepared by first applying a standard butyl rubber innerliner layer (e.g. bromobutyl rubber composition) to a standard building drum. Then a layer of butyl rubber-based sealant precursor of the composition of Sample C of Example I having a thickness of about 0.76 cm (about 0.3 inches) is applied to the innerliner layer on the building drum followed by application of diene rubber based carcass components, including the carcass plies, tread, sidewalls and beads, to form the uncured, or green, tire construction, or assembly, which contains the built-in butyl rubber-based sealant precursor layer.

The green tire is cured in a suitable tire curing mold at an elevated temperature to form a tire with a built-in sealant layer having a thickness of about 0.38 cm (about 0.15 inches) formed by a partial (substantial) depolymerization of the butyl rubber-based sealant precursor layer by the organoperoxide and magnesium oxide modifier at an elevated tire cure temperature.

## Claims

1. A tire containing a puncture sealant layer comprising a dicumyl peroxide depolymerized butyl rubber and a modifier comprising:
(A) a basic metal oxide modifier, or
(B) combination of a basic metal oxide modifier and a calcium carbonate co-modifier.

2. The tire of claim 1 wherein said metal oxide modifier comprises magnesium oxide.

3. The tire of claim 1 or 2 wherein said puncture sealant contains a polyethylene glycol having a weight average molecular weight in a range of from 2,000 to 15,000.

4. The tire of at least one of the previous claims wherein said butyl rubber is depolymerized in situ in said tire with said combination of said dicumyl peroxide and said modifier.

5. The tire of at least on of the previous claims wherein said sealant layer is positioned:
(A) between a tire innerliner rubber layer and tire rubber carcass, or
(B) between two tire innerliner rubber layers, or
(C) on an exterior surface of a tire innerliner rubber layer.

6. The tire of at least one of the previous claims wherein said puncture sealing layer comprises, based upon parts by weight per 100 parts by weight of said partially depolymerized butyl rubber:
(A) said depolymerized butyl rubber;
(B) particulate filler comprising clay;
(C) particulate reinforcing filler comprising:
(1) precipitated silica and rubber reinforcing carbon black; or
(2) precipitated silica;
(D) optionally from 0 to 6 phr of short organic fibers;
(E) optionally a colorant of other than a black color selected from at least one of organic pigments, inorganic pigments and dyes, and preferably from organic pigments and inorganic pigments;
(F) optionally from 0 to 20 rubber processing oil.

7. The tire of at least one of the previous claims wherein said sealant layer:
(A) extends from one shoulder of the tire to the other through the crown region of the tire;
(B) is positioned in at least one tire shoulder area region and extends into at least a portion of the adjoining tire sidewall portion of the tire, or
(C) extends from sidewall-to-sidewall through the tire crown region.

8. A tire sealant precursor composition comprising:
(A) butyl rubber,
(B) dicumyl peroxide;
(C) modifier comprising:
(1) basic metal oxide modifier, or
(2) basic metal oxide modifier, and calcium carbonate co-modifier;
(D) reinforcing filler comprising:
(1) precipitated silica and rubber reinforcing carbon black,
(2) precipitated silica and colorant having a color other than black, or
(3) precipitated silica, a colorant having a color other than black and a minimal amount of rubber reinforcing carbon black so long as the sealant is of a non-black color; and
(E) optionally clay.

9. The tire sealant precursor composition of claim 8 wherein said basic metal oxide modifier comprises magnesium oxide and/or wherein the sealant precursor composition contains a polyethylene glycol having a weight average molecular weight in a range of from 2,000 to 15,000.

10. A tire containing said tire sealant precursor of claim 8 or 9.
